(19) Europäisches Patentamt
European Patent Office
Office européen des brevets

(11) **EP 1 788 550 B1**

(12) **EUROPEAN PATENT SPECIFICATION**

(45) Date of publication and mention
of the grant of the patent:
**28.12.2011 Bulletin 2011/52**

(51) Int Cl.:
***G09G 3/34*** *(2006.01)*

(21) Application number: **06123570.1**

(22) Date of filing: **07.11.2006**

(54) **Display apparatus for controlling the brightness values of a plurality of light sources and method of controlling the same**

Anzeigevorrichtung zur Steuerung der Helligkeitswerte für eine Vielzahl von Lichtquellen und Verfahren zu ihrer Steuerung

Appareil d'affichage pour contrôler les valeurs de brillance d'une pluralité de sources lumineuses et procédé de contrôle de celui-ci

(84) Designated Contracting States:
**DE GB NL**

(30) Priority: **16.11.2005 KR 20050109754**

(43) Date of publication of application:
**23.05.2007 Bulletin 2007/21**

(73) Proprietor: **Samsung Electronics Co., Ltd
Suwon-si, Gyeonggi-do 442-742 (KR)**

(72) Inventor: **Jung, Jun-ho
Geumcheon-gu,
Seoul (KR)**

(74) Representative: **Robinson, Ian Michael
Appleyard Lees
15 Clare Road
Halifax, West Yorkshire HX1 2HY (GB)**

(56) References cited:
**WO-A-2004/049292       US-A1- 2004 257 329
US-A1- 2005 184 952**

**Description**

The present invention relates to a display apparatus and a method of controlling the same, and more particularly, to a display apparatus having a plurality of light sources that are separately driven, and a method of controlling the same.

Recently, flat panel displays (FPDs), such as liquid crystal displays (LCDs), display apparatuses that use plasma display panels (PDPs), and display apparatuses that use organic light emitting diodes (OLEDs), have been widely developed and used to replace cathode ray tubes (CRTs) .

In general, a backlight including a linear lamp used as a light source is widely used for a display apparatus. The conventional display apparatus that uses the backlight including the linear lamp cannot control the brightness of a portion of an image. Therefore, it is difficult to vividly display an image signal having partially high brightness, such as an image containing an explosion scene.

Recently, a plurality of light sources that can be separately driven, such as light emitting diodes (LEDs), has been developed. So, a screen of a display apparatus is partitioned into a plurality of blocks, and light sources corresponding to the blocks can be separately driven.

However, such a display apparatus has a problem in that, depending upon the image, the difference in the brightness between the blocks of the same frame or between the blocks of the different frames may be large. In the case of the large difference in brightness between the blocks in the same frame, there may be an undesirable step difference. In the case of large differences in brightness between the blocks of the different frames, there may be undesirable screen flicker. Either of the step difference or the screen flicker may result in deterioration of image quality.

US-A-2005/0184952 discloses a liquid crystal display apparatus having an LCD panel divided into partitive areas which are controlled by corresponding luminance setting signals. Further, a video signal is corrected to compensate for a step difference between the luminance levels of adjacent areas. The pre-characterising portions of the appended claims are based on this document.

According to the present invention there is provided an apparatus and method as set forth in the appended claims. Preferred features of the invention will be apparent from the dependent claims, and the description which follows.

An aspect of the present invention provides a display apparatus capable of controlling at least one of a difference in brightness between adjacent blocks and a difference in brightness between frames to improve image quality, and a method of controlling the same.

The above and/or other aspects and advantages of the prevent invention will become apparent and more readily appreciated from the following description of the exemplary embodiments, taken in conjunction with the accompany drawings, in which:

Figure 1 is an exploded perspective view of a display apparatus according to an embodiment of the present invention;

Figure 2 is a control block diagram of the display apparatus according to the embodiment of the present invention; and

Figure 3 is a flow chart illustrating an operation of the display apparatus according to the embodiment of the present invention.

Reference will now be made in detail to the embodiments of the present invention, examples of which are illustrated in the accompanying drawings, wherein like reference numerals refer to like elements throughout.

The present invention provides a display apparatus 1 having a display panel such as an LCD panel employing LEDs as a light source or a PDP that can emit light by itself in which the blocks of the light 47 can be separately driven.

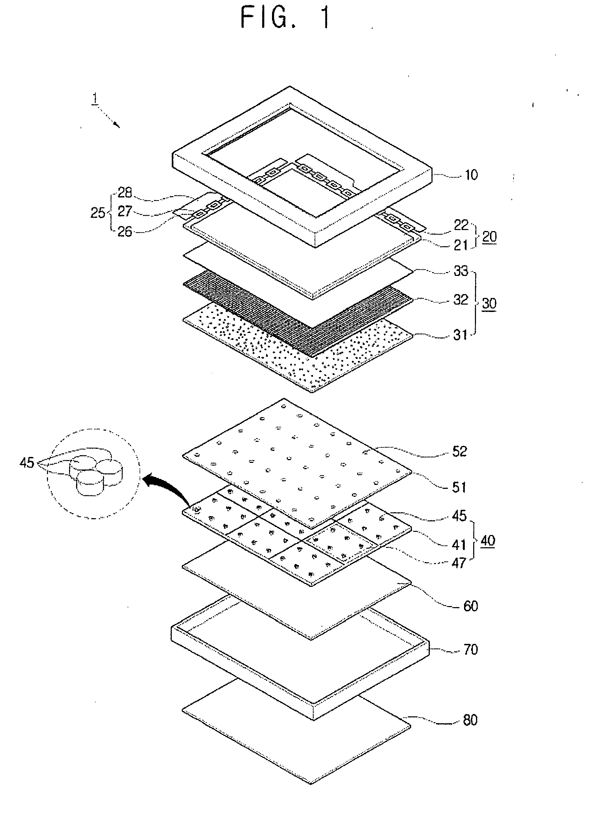

Figure 1 is an exploded perspective view of a display apparatus 1 including an LCD panel, according to an embodiment of the present invention.

As illustrated in Figure 1, the display apparatus 1 includes a display panel 20, a light controlling member 30 sequentially positioned on the back surface of the display panel 20, a light source 40 including a plurality of light source elements 45, and a light source substrate 41 on which the light source elements 45 are mounted.

The display panel 20, the light controlling member 30, and the light source substrate 41 are accommodated between a top chassis 10 and a bottom chassis 70.

The display panel 20 includes a thin film transistor (TFT) substrate 21 on which TFTs are formed, a color filter substrate 22 that faces the TFT substrate 21, a sealant (not shown) that bonds the two substrates 21 and 22 to form a cell gap, and a liquid crystal layer (not shown) positioned between the two substrates 21 and 22 and the sealant. In this embodiment, the display panel 20 has a rectangular shape with long sides and short sides. However, the shape of the display panel 20 is not limited to the above but may have various shapes.

In the display panel 20, the orientation of liquid crystals in the liquid crystal layer is controlled to form an image. However, since the display panel 20 is a non-emission device, the display panel 20 has to receive light from the light source elements 45 positioned on the back surface of the display panel 20. A driver 25 for applying a driving signal is provided on one side of the TFT substrate 21. The driver 25 includes a flexible printed circuit board (FPC) 26, a driving chip 27 mounted on the FPC 26, and a printed circuit board (PCB) 28 connected to the FPC 26. The driver 25 is shown to employ a chip-on-film (COF) system. Alternatively, other well-known systems, such as a tape carrier package (TCP) system and a chip-on-glass (COG) system may be applied to the driver 25. Also, the driver 25 may be formed on the TFT substrate 21 in a wiring line forming process.

The light controlling member 30 positioned on the back surface of the display panel 20 includes a diffusing plate 31, a prism film 32, and a passivation film 33.

The diffusing plate 31 is formed of a coating layer containing a base plate and beads formed in the base plate. The diffusing plate 31 diffuses light supplied from the light source elements 45 to provide uniform brightness.

Triangular prisms are uniformly arranged on the top surface of the prism film 32. The prism film 32 collects the light diffused by the diffusing plate 31 in a direction perpendicular to the plane at which the display panel 20 is arranged. Two sheets of prism films 32 are commonly used and micro prisms formed in the prism films 32 form a predetermined angle. Most of the light that passes through the prism films 32 perpendicularly travels to provide uniform distribution of brightness. If necessary, a reflective polarizing film may be used together with the prism films 32, or only the reflective polarizing film may be used without the prism films 32.

The light source 40 that provides light to the display panel 20 includes the plurality of light source elements 45 and the light source substrate 41 on which the light source elements 45 are mounted. The light source substrate 41 is positioned on the entire back surface of the display panel 20. Here, for the sake of convenience of description, the light source substrate 41 is shown to be partitioned. As described later, the light source 40 of the display apparatus 1 according to the embodiment of the present invention includes the plurality of light source units 47 each including at least one light source element 45. The plurality of light source units 47 may be provided to correspond to the plurality of blocks by which the light source substrate 41 is partitioned. That is, as illustrated in Figure 1, the light source substrate 41 may be partitioned into the plurality of blocks and the light source units 47 may be provided to correspond to the blocks.

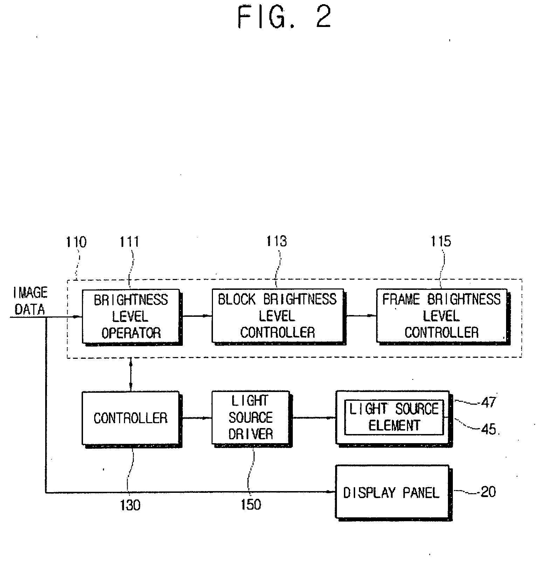

As illustrated in Figure 1, the light source 40 includes 9 light source units 47, each of which includes 6 light source elements 45. Here, each of the light source units 47 can receive power from a respective light source driver 150 (see Figure 2). The light source driver 150 and a controller 130 for controlling the light source driver 150 are provided on the back surface of the light source substrate 41.

It is preferable but not necessary that the light source elements 45 are mounted on the light source substrate 41 and are uniformly arranged on the entire back surface of the display panel 20. Each of the light source elements 45 is composed of 3 sub-light source elements for emitting red, blue, and green light components, respectively. The red, blue, and green light components are mixed with each other to supply white light to the display panel 20. A method of arranging the red, blue, and green sub-light source elements is not limited to the above but white diodes may be provided instead of the red, blue, and green sub-light source elements. Furthermore, red, blue and green light may be individually provided instead of being mixed to form the white light. That is, the different colored LED may be sequentially operated in synchronization with the corresponding colored image signals to provide colored light.

A reflecting plate 51 is provided on the light source substrate 41 where the light source elements 45 are not formed. Light source element accommodating holes 52 corresponding to the light source elements 45 are provided in the reflecting plate 51 so that the light source elements 45 are accommodated in the light source device accommodating holes 52. The reflecting plate 51 reflects light incident on the lower part thereof to supply the reflected light to the diffusing plate 31. The reflecting plate 51 may be formed of polyethyleneterephthalate (PET) or polycarbonate (PC). Also, the reflecting plate 51 may be provided to be thick so that the reflecting plate 51 is not shriveled by the strong heat generated by the light source elements 45.

According to another embodiment, the light source 40 may include lamps as well as light emitting devices such as the LEDs if the lamps can be driven by block. In this case, it is preferable but not necessary that the lamps are divided into a plurality of blocks to adjust highlight of the light source 40 by block. In this case, a plurality of light source drivers 150 has to be provided to correspond to the plurality of blocks. A cold cathode fluorescent lamp (CCFL) or an external electrode fluorescent lamp (EEFL) may be used as the lamp.

A heat conduction sheet 80 is attached to the external surface of the bottom chasse 70. The heat conduction sheet 80, which is arranged in parallel with the light source substrate 41, receives the heat generated by the light source elements 45 and discharges the received heat to the outside. The heat conductivity of the heat conduction sheet 80 in a plane direction is different from the heat conductivity of the heat conduction sheet 80 in a thickness direction. It is preferable but not necessary that the heat conductivity in the plane direction is larger by more than 100W/mK than the heat conductivity in the thickness direction.

Figure 2 is an internal control block diagram of the display apparatus 1 according to the embodiment of the present invention. Hereinafter, Figure 2 will be described in detail with reference to Figure 1.

As illustrated in Figure 2, the display apparatus 1 according to the embodiment of the present invention includes the display panel 20, the light source units 47 each having at least one light source element 45, the light source driver 150, a data processor 110, and a controller 130.

The display panel 20 displays a predetermined image based on image data. The display panel 20 is partitioned into a plurality of blocks each having a respective light source unit 47. To be specific, each of the plurality of light source units 47 provided on the back surface of the display panel 20 includes at least one light source element 45.

In the display apparatus 1, the display panel 20 is divided into blocks and the light source units 47 are provided to correspond to the blocks. For example, when the display panel 20 is divided into 9 blocks, the light source 40 includes 9 light source units 47 corresponding to the 9 blocks. Here, since each of the light source units 47 is driven by the light source driver 150 capable of transmitting a voltage, which will be described later, the light source units 47 provide highlighted light components different by blocks to the display panel 20.

The light source driver 150 supplies power to the corresponding light source unit 47 that is electrically connected to the light source driver 150. Specifically, the light source driver 150 supplies power to the light source elements 45, for example, red, blue, and green LEDs, included in the corresponding light source unit 47. The amount of power supplied to the red, blue, and green LEDs are controlled by the controller 130 to be described later.

The data processor 110 processes image data of an image signal applied to the display panel 20 and determines brightness levels to be output from the light source units 47. That is, the data processor 110 provides brightness levels that are different by blocks or the same brightness level for all blocks to the controller 130 that controls the light source units 47.

In this embodiment, the data processor 110 includes a brightness level operator 111 and may further include at least one of a block brightness level controller 113 and a frame brightness level controller 115.

The brightness level operator 111 operates brightness levels of input image data. Here, it is preferable but not necessary that 60 frames of the image data are sequentially applied in one second.

The brightness level operator 111 may operate a brightness level for each frame by blocks or may operate the brightness levels of the entire frames regardless of blocks. Here, the brightness level operator 111 may calculate the brightness level for each pixel of the image signal.

The block brightness level controller 113 operates differences in brightness level between adjacent blocks and controls at least one of the brightness levels by blocks so that the differences in brightness level between the adjacent blocks fall within a predetermined range.

To be specific, in the case where the blocks include a first block and a second block adjacent to the first block, when a difference between a first brightness level corresponding to the first block and a second brightness level corresponding to the second block is out of a predetermined range, the block brightness level controller 113 changes at least one of the first brightness level and the second brightness level to a predetermined brightness level based on the difference between the first and second brightness levels.

For example, the blocks may be distinguished from each other in accordance with their positions on the display panel as follows.

| B (x, y)   | B (x+1, y)   | ...  |
| ---------- | ------------ | ---- |
| B (x, y+1) | B (x+1, y+1) |      |
| ...        |              |      |

As shown in the above table, the blocks of the display panel 20 are distinguished from each other by B(x,y), B (x+1, y), B (x, y+1), and B (x+1, y+1) to correspond to the positions of the blocks. In this embodiment, the block brightness level controller 113 controls the brightness levels of the blocks according to [EQUATION 1] and [EQUATION 2] when differences in brightness level between blocks are out of a predetermined range.

[EQUATION 1]

$$\text{when } B(x, y) \geq B(x+1, y) \text{ and } |B(x, y) - B(x+1, y)| > \text{predetermined range,}$$
$$B(x+1, y) = B(x, y) - a$$

wherein, $a$ is preferably a value obtained by experiments.

[EQUATION 2]

when $B(x, y) < B(x +1, y)$ and $|B(x, y) - B(x +1, y)| >$ predetermined range,

$B(x, y) = B(x +1, y) - a$

A difference in brightness level between B(x,y) and B(x, y+1) as well as between B(x,y) and B(x+1, y) is determined to control the brightness levels of the blocks. Also, a difference in brightness level between B (x, y) and B (x+1,y+1) is determined to control the brightness levels of the blocks.

When the brightness level operator 111 calculates the brightness levels of the image data corresponding to the frames, the frame brightness level controller 115 operates a difference in brightness level between two consecutive frames and controls the brightness levels of the frames based on the difference in brightness level between the two consecutive frames.

For example, the frame brightness level controller 115 operates a difference in brightness level between preceding and current frames and controls the brightness levels of the frames based on the operated difference in brightness level between the preceding and the current frames.

Here, the frame brightness level controller 115 calculates the difference in brightness level between the preceding and current frame based on the brightness levels of the pixels of the image data. That is, the frame brightness level controller 115 calculates the difference in brightness level between the preceding and current frame based on a difference between a histogram of brightness level vs. pixel of the preceding frame and a histogram of brightness level vs. pixel of the current frame.

That is, the frame brightness level controller 115 controls the brightness level of the current frame to be controlled to be a brightness level between the brightness level of the preceding frame and the brightness level of the current frame before the adjustment. To be specific, the smaller the difference in brightness level between the preceding frame and the current frame before the adjustment, the closer the brightness level of the current frame is to the brightness level of the preceding frame.

In this embodiment, the brightness levels of the pixels are divided into 0 to 255 levels and the brightness levels of the pixels are calculated to calculate differences in brightness level between pixels included in the preceding frame and pixels included in the current frame.

Here, the difference in brightness level between the preceding frame Ff and the current frame Fr is obtained from [EQUATION 3].

[EQUATION 3]

Difference = (the number of 0s of Ff – the number of 0s of Fr) + (the number of 1s of Ff – the number of 1s of Fr) + … + (the number of 255s of Ff – the number of 255s of Fr)

In this manner, the frame brightness level controller 115 calculates coefficients corresponding to the calculated difference values and calculates the brightness level of the current frame controlled by EQUATION 4 based on the calculated coefficients.

[EQUATION 4]

Controlled brightness level of current frame = (255 –
coefficient) x the brightness level of the preceding frame
+ coefficient x brightness level of current frame that is
not controlled

The frame brightness level controller 115 controls the brightness level corresponding to the current frame according to [EQUATION 4]. The larger the difference between the brightness level of the current frame before the adjustment and the brightness of the preceding frame is, the closer the brightness level of the current frame is to the brightness level of the current frame before the adjustment.

That is, the smaller the difference between the brightness level of the current frame and the brightness level of the preceding frame is, the closer the brightness level of the current frame is to the brightness level of the preceding frame.

Here, the frame brightness level controller 115 calculates only the difference in brightness level between the frames in a predetermined region and controls only the brightness level of the current frame in the predetermined region based on the difference in brightness level in the predetermined region.

That is, the frame brightness level controller 115 operates the difference in brightness level between the consecutive preceding and current frames corresponding to at least one block and controls the brightness level of the current frame corresponding to at least one block so that the difference in brightness level between the frames falls in the predetermined range.

It is noted that the various other ways of obtaining the difference in the brightness levels between the adjacent blocks of the same frame or between the blocks of the different frames that correspond to the same position within the frame may be utilized. Furthermore, in case the difference between the blocks is limited to a predetermined maximum value, the maximum value may be arrived at by a tuning process involving a visual observation by a technician or an end-user. Still furthermore, the maximum values may be variable in accordance with the input video signal. As an example, if the difference in the brightness levels of the blocks are between the blocks in the lower range of the brightness levels, the maximum difference level allowed by the controller 130 may be smaller as compared to the case in which the difference in the brightness levels of the blocks are between the blocks in the higher range of the brightness levels. The reason for this is that the human eyes tend to be more sensitive to the changes in the brightness levels in the lower range (which may cause to viewer to see artifacts) than the changes in the brightness levels in the higher range. Other factors that may influence the setting of the maximum brightness values between the blocks allowed by the controller 130 may include the type of lights source 47 and the specification or rating of the light source 47.

The controller 130 controls the light source driver 150 based on the brightness of each block calculated and controlled by the data processor 110. That is, the controller 130 controls the light source driver 150 in such a manner that a light source unit 47 corresponding to a block having high brightness provides light of high brightness and that a light source unit 47 corresponding to a block having low brightness provides light of low brightness. To this end, the light source driver 150 supplies different power to the light source units 47 corresponding to the brightness of the blocks. Accordingly, the brightness of each light source unit 47 provided to a screen varies with blocks. Also, the controller 130 controls the light source driver 150 so that the brightness of each light source unit 47 in the next frame also varies with image data. Then, the light source driver 150 supplies power to each of the light source units 47.

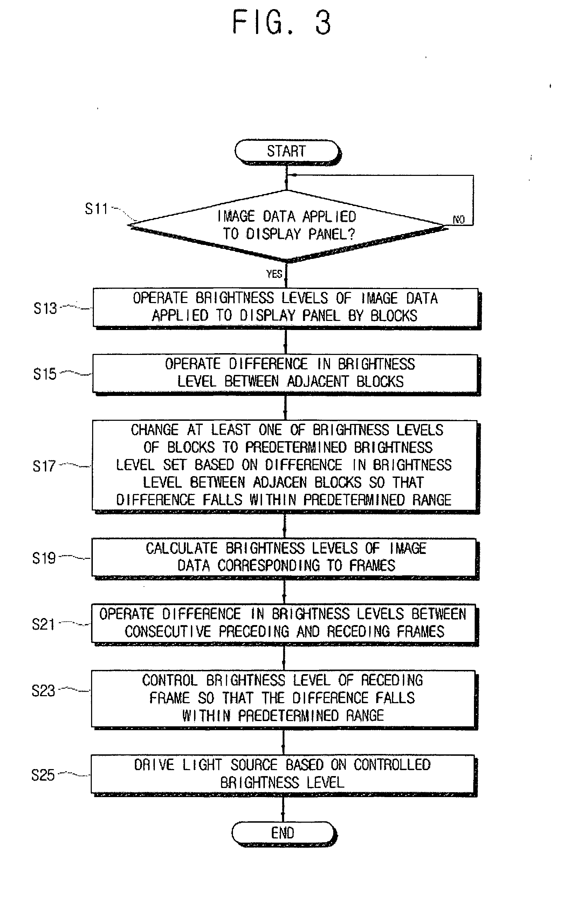

Hereinafter, a control method of the above-described display apparatus will be described with reference to FIG. 3 showing a flow chart of an operation of the display apparatus according to the embodiment of the present invention.

As illustrated in Figure 3, in the display apparatus 1, when image data are applied to the display panel 20 at operation S11, an image is displayed on the display panel 20 based on the applied image data.

The display panel 20 is divided into predetermined blocks so that the light source units 47 corresponding to the blocks are separately driven. Accordingly, the brightness levels of the blocks may be differently represented. Here, the division of the display panel 20 into the predetermined blocks is not seen to a user, but means that the light source elements included in the light source 40 are separately driven with predetermined units.

The brightness level operator 111 of the display apparatus 1 operates the brightness levels of the image data applied to the display panel 20. At this time, the brightness level operator 111 operates the brightness levels of the image data by blocks into which the display panel 20 is divided at operation S13. The block brightness level controller 113 operates a difference in brightness level between adjacent blocks based on the brightness levels of the image data operated by the brightness level operator 111 at operation S15.

The block brightness level controller 113 controls at least one of the brightness levels by blocks to a predetermined brightness level so that the difference in brightness level between the adjacent blocks falls within a predetermined range at operation S17. That is, the difference in the brightness level is limited to a maximum brightness value (as described above). Since the method of the block brightness level controller 113 controlling the brightness levels of the image data corresponding to the blocks was described above, description of the method will be herein omitted.

On the other hand, the brightness level operator 111 calculates the brightness levels of the image data corresponding to the frames at operation S19. Then, the frame brightness level controller 115 operates a difference in brightness level between continuous preceding and current frames at operation S21. Since the method of the frame brightness level controller 115 operating the difference in brightness level between the preceding and current frames was described above, description of the method will be herein omitted.

The frame brightness level controller 115 controls the brightness level of the image data corresponding to the current frame so that the difference in brightness level of image data between continuous preceding and current frames fall within a predetermined range at operation S23. That is, the difference in the brightness level is limited to a maximum brightness value (as described above). At this time, it is preferable but not necessary that the frame brightness level controller 115 controls the controlled brightness level of the image data corresponding to the current frame to be between the brightness level of the image data corresponding to the current frame and the brightness level of the image data corresponding to the preceding frame. At this time, since the method of the frame brightness level controller 115 controlling the brightness level of the image data corresponding to the current frame was described above, description of the method will be herein omitted.

At this time, the frame brightness level controller 115 calculates the difference in brightness level between preceding and current frames in the predetermined region based on the brightness levels of the image data corresponding to the blocks and controls the brightness level corresponding to the current frame based on the calculated difference.

The controller 130 controls the light source driver 150 so that the light source 40 is separately driven, based on at least one of the brightness levels of the image data controlled by the block brightness level controller 113 and the frame brightness level controller 115 at operation S25.

According to the above-described embodiment, the data processor 110 calculates brightness levels and the light source units 47 are driven based on the calculated brightness levels. Here, the brightness levels include gray scale levels. The data processor 110 calculates the gray scale levels of the image data and the controller 130 drives the light source units 47 based on the gray scale levels to control the brightness of the image displayed on the display panel 20.

As described above, in the display apparatus 1 of the present invention, the light source units 47 are separately driven to provide different highlighted light components to the blocks of the display panel 20. Also, in the display apparatus 1 of the present invention, different highlighted light components are provided to the blocks. However, since the block brightness level controller 113 controls the brightness levels of the blocks, it is possible to prevent differences in the highlighted light components by blocks from increasing, hence preventing stepped brightness difference from being generated between blocks, thereby avoiding deterioration of image quality. Also, in the display apparatus 1, the frame brightness level controller 115 controls the brightness levels by frames or by some blocks in the frames to prevent flickers from being generated in the frames or in some regions due to the difference in brightness level between preceding and current frames.

As apparent from the above description, the present invention provides a display apparatus capable of controlling at least one of a difference in brightness level between adjacent blocks and a difference in brightness level between frames to improve image quality, and a method of controlling the same.

Although a few preferred embodiments have been shown and described, it will be appreciated by those skilled in the art that various changes and modifications might be made without departing from the scope of the invention, as defined in the appended claims.

**Claims**

1. A display apparatus (1), comprising:

   a display panel (20);
   a plurality of light source units (47) corresponding to blocks of the display panel (20), each of the light source units (47) comprising one or more light source elements (45);
   a light source driver (150) for separately driving the plurality of light source units (47);
   a brightness level operator (111) for calculating a brightness level for each of the blocks according to brightness levels of image data of a frame to be applied to the corresponding blocks of the display panel (20); and
   a controller (130) for controlling the light source driver (150) to drive the light source units (47) corresponding to a block of the display panel based on the calculated brightness level for each said block;

**characterised in that**:

a block brightness level controller (113) is arranged to change the calculated brightness level of at least one block so that a difference in the brightness level between the at least one block and an adjacent block falls within a predetermined range and is not greater than a predetermined maximum value in a frame.

2. The display apparatus (1) according to claim 1, wherein the blocks comprise a first block and a second block adjacent to the first block, and
wherein, when a difference between a first brightness level corresponding to the first block and a second brightness level corresponding to the second block is out of the predetermined range, the block brightness level controller (113) changes at least one of the first brightness level and the second brightness level to a predetermined brightness level based on the difference.

3. The display apparatus (1) according to claim 1 or 2, wherein the brightness level operator (111) calculates the brightness levels of the image data corresponding to frames, and the apparatus further comprises a frame brightness level controller (115) for controlling a difference in brightness level between two consecutive frames and for controlling the brightness level of a current frame to be a brightness level between the brightness level of a preceding frame and the brightness level of the current frame before the adjustment.

4. The display apparatus (1) according to claim 3, wherein the frame brightness level controller (115) controls the difference in brightness level of at least one block in a preceding frame and the brightness level of the at least one block in the current frame corresponding to the same position in the frame so that the difference falls within a predetermined range.

5. The display apparatus (1) according to claim 4, wherein the frame brightness level controller (115) controls the brightness level of the current frame to be between the brightness level of the preceding frame and the brightness level of the current frame before the adjustment.

6. The display apparatus (1) according to claim 5, wherein the frame brightness level controller (115) controls the brightness level of the current frame to be close to the brightness level of the preceding frame as the difference in brightness level between the preceding frame and the current frame gets smaller.

7. The display apparatus (1) according to any preceding claim, wherein the light source elements (45) are provided all over the back surface of the display panel (20).

8. The display apparatus (1) according to claim 7, wherein the light source elements (45) are light emitting diodes (LED).

9. The display apparatus (1) according to claim 1, wherein the predetermined maximum value is variable.

10. The display apparatus (1) according to claim 9, wherein the predetermined maximum value is variable in accordance with the brightness values of the blocks that were utilized to determine the difference.

11. The display apparatus (1) according to claim 10, wherein the predetermined maximum value is less in the case where the blocks that were utilized to determine the difference have relatively low brightness values as compared to the case where the blocks that were utilized to determine the difference have relatively high brightness value.

12. A method of controlling a display apparatus (1) comprising a display panel (20) and a plurality of light source units (47), arranged in blocks corresponding to regions of the display panel (20), the method comprising:

calculating brightness levels for each of the blocks according to brightness levels of image data of a frame to be applied to the corresponding regions of the display panel (20); and
driving the light source units (47) based on the calculated brightness levels;

**characterised by** the steps of:

changing in a frame the calculated brightness levels of at least one block by controlling a difference in the brightness level between adjacent blocks, including if the difference is out of a predetermined range and is greater than a predetermined maximum value, controlling the brightness level of at least one block so that the difference falls within the predetermined maximum value.

13. The method according to claim 12, wherein the blocks comprise a first block and a second block adjacent to the first block, and
wherein the controlling the at least one of the brightness levels comprises changing at least one of a first brightness level corresponding to the first block and a second brightness level corresponding to the second block to a predetermined brightness level set based on the difference between the first brightness level and the second brightness level so that the difference falls within a predetermined range.

14. The method according to claim 12 or 13, further comprising:

calculating the brightness levels of the image data corresponding to frames; and
controlling a difference in brightness level between two consecutive image frames by controlling the brightness level of a current frame to be a brightness level between the brightness level of a preceding frame and the brightness level of the current frame before the adjustment.

15. The method according to claim 14, wherein the controlling step comprises controlling the difference in brightness level of at least one block in a preceding frame and the brightness level of the at least one block in the current frame corresponding to the same position in the frame so that the difference falls within a predetermined range.

16. The method according to claim 15, wherein the controlling the brightness level comprises controlling the brightness level of the current frame to be close to the brightness level of the preceding frame as the difference in brightness level between the preceding frame and the current frame gets smaller.

17. The method according to claim 12, wherein the predetermined maximum value is variable.

18. The method according to claim 17, wherein the predetermined maximum value is variable in accordance with the brightness values of the blocks that were utilized to determine the difference.

19. The method according to claim 18, wherein the predetermined maximum value is less in the case where the blocks that were utilized to determine the difference have relatively low brightness values as compared to the case where the blocks that were utilized to determine the difference have relatively high brightness value.

**Patentansprüche**

1. Anzeigevorrichtung (1), die Folgendes umfasst:

ein Anzeigepanel (20);
mehrere Lichtquelleneinheiten (47) entsprechend Blöcken des Anzeigepanels (20), wobei jede der Lichtquelleneinheiten (47) ein oder mehrere Lichtquellenelemente (45) umfasst;
einen Lichtquellentreiber (150) zum separaten Ansteuern der mehreren Lichtquelleneinheiten (47);
einen Helligkeitshöhenoperator (111) zum Berechnen einer Helligkeitshöhe für jeden der Blöcke gemäß Helligkeitshöhen von Bilddaten eines Einzelbilds zur Anwendung auf die entsprechenden Blöcke des Anzeigepanels (20); und
einen Controller (130) zum Steuern des Lichtquellentreibers (150) zum Ansteuern der Lichtquelleneinheiten (47) entsprechend einem Block des Anzeigepanels auf der Basis der berechneten Helligkeitshöhe für jeden Block;

**dadurch gekennzeichnet, dass**
ein Blockhelligkeitshöhencontroller (113) ausgelegt ist zum Ändern der berechneten Helligkeitshöhe mindestens eines Blocks, so dass eine Differenz bei der Helligkeitshöhe zwischen dem mindestens einen Block und einem benachbarten Block in einen vorbestimmten Bereich fällt und nicht größer ist als ein vorbestimmter Höchstwert in einem Einzelbild.

2. Anzeigevorrichtung (1) nach Anspruch 1, wobei die Blöcke einen ersten Block und einen zweiten Block bei dem ersten Block umfassen, und

wobei, wenn eine Differenz zwischen einer ersten Helligkeitshöhe entsprechend dem ersten Block und einer zweiten Helligkeitshöhe entsprechend dem zweiten Block außerhalb des vorbestimmten Bereichs liegt, der Blockhelligkeitshöhencontroller (113) die erste Helligkeitshöhe und/oder die zweite Helligkeitshöhe auf der Basis der Differenz auf eine vorbestimmte Helligkeitshöhe ändert.

3. Anzeigevorrichtung (1) nach Anspruch 1 oder 2, wobei der Helligkeitshöhenoperator (111) die Helligkeitshöhen der Bilddaten entsprechend Einzelbildern berechnet und die Vorrichtung weiterhin einen Einzelbildhelligkeitshöhencontroller (115) umfasst zum Steuern einer Differenz bei der Helligkeitshöhe zwischen zwei aufeinanderfolgenden Einzelbildern und zum Steuern der Helligkeitshöhe eines aktuellen Einzelbilds auf eine Helligkeitshöhe zwischen der Helligkeitshöhe eines vorausgegangenen Einzelbilds und der Helligkeitshöhe des aktuellen Einzelbilds vor der Verstellung.

4. Anzeigevorrichtung (1) nach Anspruch 3, wobei der Einzelbildhelligkeitshöhencontroller (115) die Differenz bei der Helligkeitshöhe mindestens eines Blocks in einem vorausgegangenen Einzelbild und der Helligkeitshöhe des mindestens einen Blocks in dem aktuellen Einzelbild entsprechend der gleichen Position in dem Einzelbild steuert, so dass die Differenz in einen vorbestimmten Bereich fällt.

5. Anzeigevorrichtung (1) nach Anspruch 4, wobei der Einzelbildhelligkeitshöhencontroller (115) die Helligkeitshöhe des aktuellen Einzelbilds so steuert, dass sie zwischen der Helligkeitshöhe des vorausgegangenen Einzelbilds und der Helligkeitshöhe des aktuellen Einzelbilds liegt, und zwar vor der Justierung.

6. Anzeigevorrichtung (1) nach Anspruch 5, wobei der Einzelbildhelligkeitshöhencontroller (115) die Helligkeitshöhe des aktuellen Rahmens so steuert, dass sie nahe der Helligkeitshöhe des vorausgegangenen Einzelbilds liegt, wenn die Differenz bei der Helligkeitshöhe zwischen dem vorausgegangenen Einzelbild und dem aktuellen Einzelbild kleiner wird.

7. Anzeigevorrichtung (1) nach einem vorhergehenden Anspruch, wobei die Lichtquellenelemente (45) über der ganzen hinteren Oberfläche des Anzeigepanels (20) vorgesehen sind.

8. Anzeigevorrichtung (1) nach Anspruch 7, wobei die Lichtquellenelemente (45) Leuchtdioden (LED) sind.

9. Anzeigevorrichtung (1) nach Anspruch 1, wobei der vorbestimmte Höchstwert variabel ist.

10. Anzeigevorrichtung (1) nach Anspruch 9, wobei der vorbestimmte Höchstwert gemäß den Helligkeitswerten der Blöcke, die zum Bestimmen der Differenz genutzt wurden, variabel ist.

11. Anzeigevorrichtung (1) nach Anspruch 10, wobei der vorbestimmte Höchstwert in dem Fall kleiner ist, dass die Blöcke, die zum Bestimmen der Differenz genutzt wurden, relativ niedrige Helligkeitswerte im Vergleich zu dem Fall aufweisen, dass die Blöcke, die zum Bestimmen der Differenz genutzt wurden, einen relativ hohen Helligkeitswert aufweisen.

12. Verfahren zum Steuern einer Anzeigevorrichtung (1), die ein Anzeigepanel (20) und mehrere Lichtquelleneinheiten (47) umfasst, angeordnet in Blöcken entsprechend Gebieten des Anzeigepanels (20), wobei das Verfahren Folgendes umfasst:

Berechnen von Helligkeitshöhen für jeden der Blöcke gemäß Helligkeitshöhen von Bilddaten eines Einzelbilds zur Anwendung auf die entsprechenden Gebiete des Anzeigepanels (20); und
Ansteuern der Lichtquelleneinheiten (47) auf der Basis der berechneten Helligkeitshöhen;

**gekennzeichnet durch** die folgenden Schritte:

Ändern der berechneten Helligkeitshöhen mindestens eines Blocks in einem Einzelbild **durch** Steuern einer Differenz bei der Helligkeitshöhe zwischen benachbarten Blöcken, was beinhaltet, falls die Differenz außerhalb eines vorbestimmten Bereichs liegt und größer ist als ein vorbestimmter Höchstwert, Steuern der Helligkeitshöhe mindestens eines Blocks, so dass die Differenz in den vorbestimmten Höchstwert fällt.

13. Verfahren nach Anspruch 12, wobei die Blöcke einen ersten Block und einen zweiten Block bei dem ersten Block umfassen und

wobei das Steuern der mindestens einen der Helligkeitshöhen das Ändern mindestens eines einer ersten Helligkeitshöhe entsprechend dem ersten Block und einer zweiten Helligkeitshöhe entsprechend dem zweiten Block zu einer vorbestimmten Helligkeitshöhe, eingestellt auf der Basis der Differenz zwischen der ersten Helligkeitshöhe und der zweiten Helligkeitshöhe, umfasst, so dass die Differenz in einen vorbestimmten Bereich fällt.

14. Verfahren nach Anspruch 12 oder 13, das weiterhin Folgendes umfasst:

Berechnen der Helligkeitshöhen der Bilddaten entsprechend Einzelbildern und

Steuern einer Differenz bei der Helligkeitshöhe zwischen zwei aufeinanderfolgenden Einzelbildern durch Steuern der Helligkeitshöhe eines aktuellen Einzelbilds auf eine Helligkeitshöhe zwischen der Helligkeitshöhe eines vorausgegangenen Einzelbilds und der Helligkeitshöhe des aktuellen Einzelbilds vor der Verstellung.

15. Verfahren nach Anspruch 14, wobei der Steuerschritt das Steuern der Differenz bei der Helligkeitshöhe mindestens eines Blocks in einem vorausgegangenen Einzelbild und der Helligkeitshöhe des mindestens einen Blocks in dem aktuellen Einzelbild entsprechend der gleichen Position in dem Einzelbild umfasst, so dass die Differenz in einen vorbestimmten Bereich fällt.

16. Verfahren nach Anspruch 15, wobei das Steuern der Helligkeitshöhe umfasst, die Helligkeitshöhe des aktuellen Einzelbilds so zu steuern, dass sie nahe bei der Helligkeitshöhe des vorausgehenden Einzelbilds liegt, wenn die Differenz bei der Helligkeitshöhe zwischen dem vorausgegangenen Einzelbild und dem aktuellen Einzelbild kleiner wird.

17. Verfahren nach Anspruch 12, wobei der vorbestimmte Höchstwert variabel ist.

18. Verfahren nach Anspruch 17, wobei der vorbestimmte Höchstwert gemäß den Helligkeitswerten der Blöcke, die zum Bestimmen der Differenz genutzt wurden, variabel ist.

19. Verfahren nach Anspruch 18, wobei der vorbestimmte Höchstwert in dem Fall kleiner ist, dass die Blöcke, die zum Bestimmen der Differenz genutzt wurden, relativ niedrige Helligkeitswerte im Vergleich zu dem Fall aufweisen, dass die Blöcke, die zum Bestimmen der Differenz genutzt wurden, einen relativ hohen Helligkeitswert aufweisen.


**Revendications**

1. Appareil d'affichage (1), comprenant :

un panneau d'affichage (20) ;

une pluralité d'unités formant sources lumineuses (47) correspondant à des blocs du panneau d'affichage (20), chacune des unités formant sources lumineuses (47) comprenant un ou plusieurs éléments de source lumineuse (45) ;

un circuit d'attaque de source lumineuse (150) destiné à attaquer séparément la pluralité d'unités formant sources lumineuses (47) ;

un opérateur de niveau de luminosité (111) destiné à calculer un niveau de luminosité pour chacun des blocs en fonction de niveaux de luminosité de données d'image d'une trame devant être appliqués aux blocs correspondants du panneau d'affichage (20) ; et

une unité de commande (130) destinée à commander le circuit d'attaque de source lumineuse (150) afin qu'il attaque les unités formant sources lumineuses (47) correspondant à un bloc du panneau d'affichage sur la base du niveau de luminosité calculé pour chacun desdits blocs ;

**caractérisé en ce que** :

une unité de commande de niveau de luminosité de bloc (113) est conçue pour modifier le niveau de luminosité calculé d'au moins un bloc afin qu'une différence de niveau de luminosité entre l'au moins un bloc et un bloc adjacent se situe dans une gamme prédéterminée et ne soit pas supérieure à une valeur maximale prédéterminée dans une trame.

2. Appareil d'affichage (1) selon la revendication 1, dans lequel les blocs comprennent un premier bloc et un second bloc adjacent au premier bloc, et

dans lequel, lorsqu'une différence entre un premier niveau de luminosité correspondant au premier bloc et un second niveau de luminosité correspondant au second bloc est en dehors de la gamme prédéterminée, l'unité de commande de niveau de luminosité de bloc (113) fait passer au moins l'un du premier niveau de luminosité et du second niveau de luminosité à un niveau de luminosité prédéterminé sur la base de la différence.

3. Appareil d'affichage (1) selon la revendication 1 ou 2, dans lequel l'opérateur de niveau de luminosité (111) calcule les niveaux de luminosité des données d'image correspondant à des trames, et dans lequel l'appareil comprend en outre une unité de commande de niveau de luminosité de trame (115) destinée à commander une différence de niveau de luminosité entre deux trames consécutives et à commander le niveau de luminosité d'une trame courante afin qu'elle soit à un niveau de luminosité compris entre le niveau de luminosité d'une trame précédente et le niveau de luminosité de la trame courante avant l'ajustement.

4. Appareil d'affichage (1) selon la revendication 3, dans lequel l'unité de commande de niveau de luminosité de trame (115) commande la différence de niveau de luminosité d'au moins un bloc d'une trame précédente et le niveau de luminosité de l'au moins un bloc dans la trame courante correspondant à la même position dans la trame afin que la différence se situe dans une gamme prédéterminée.

5. Appareil d'affichage (1) selon la revendication 4, dans lequel l'unité de commande de niveau de luminosité de trame (115) commande le niveau de luminosité de la trame courante afin qu'il se situe entre le niveau de luminosité de la trame précédente et le niveau de luminosité de la trame courante avant l'ajustement.

6. Appareil d'affichage (1) selon la revendication 5, dans lequel l'unité de commande de niveau de luminosité de trame (115) commande le niveau de luminosité de la trame courante afin qu'il soit proche du niveau de luminosité de la trame précédente à mesure que la différence de niveau de luminosité entre la trame précédente et la trame courante diminue.

7. Appareil d'affichage (1) selon l'une quelconque des revendications précédentes, dans lequel les éléments de source lumineuse (45) sont disposés sur la totalité de la surface arrière du panneau d'affichage (20).

8. Appareil d'affichage (1) selon la revendication 7, dans lequel les éléments de source lumineuse (45) sont des diodes électroluminescentes (LED).

9. Appareil d'affichage (1) selon la revendication 1, dans lequel la valeur maximale prédéterminée est variable.

10. Appareil d'affichage (1) selon la revendication 9, dans lequel la valeur maximale prédéterminée est variable en fonction des niveaux de luminosité des blocs ayant été utilisés pour déterminer la différence.

11. Appareil d'affichage (1) selon la revendication 10, dans lequel la valeur maximale prédéterminée est plus faible dans le cas où les blocs ayant été utilisés pour déterminer la différence ont des valeurs de luminosité relativement faibles par comparaison au cas où les blocs ayant été utilisés pour déterminer la différence ont une valeur de luminosité relativement élevée.

12. Procédé d'affichage (1), comprenant un panneau d'affichage (20) et une pluralité d'unités formant sources lumineuses (47), agencées dans des blocs correspondant à des régions du panneau d'affichage (20), le procédé comprenant :

le calcul de niveaux de luminosité pour chacun des blocs en fonction de niveaux de luminosité de données d'image d'une trame devant être appliqués aux régions correspondantes du panneau d'affichage (20) ; et l'attaque des unités formant sources lumineuses (47) sur la base des niveaux de luminosité calculés ;

**caractérisé par** les étapes comprenant :

la modification, dans une trame, des niveaux de luminosité calculés d'au moins un bloc par commande d'une différence de niveau de luminosité entre des blocs adjacents, cela comprenant, si la différence se situe en dehors d'une gamme prédéterminée et est supérieure à une valeur maximale prédéterminée, la commande du niveau de luminosité d'au moins un bloc afin que la différence se situe en deçà de la valeur maximale prédéterminée.

**13.** Procédé selon la revendication 12, dans lequel les blocs comprennent un premier bloc et un second bloc adjacent au premier bloc, et

dans lequel la commande de l'au moins un des niveaux de luminosité comprend la modification d'au moins l'un d'un premier niveau de luminosité correspondant au premier bloc et d'un second niveau de luminosité correspondant au second bloc pour obtenir un niveau de luminosité prédéterminé réglé sur la base de la différence entre le premier niveau de luminosité et le second niveau de luminosité afin que la différence se situe dans une gamme prédéterminée.

**14.** Procédé selon la revendication 12 ou 13, comprenant en outre :

le calcul des niveaux de luminosité des données d'image correspondant à des trames ; et
la commande d'une différence de niveau de luminosité entre deux trames d'image consécutives par commande du niveau de luminosité d'une trame courante afin qu'il soit égal à un niveau de luminosité compris entre le niveau de luminosité d'une trame précédente et le niveau de luminosité de la trame courante avant l'ajustement.

**15.** Procédé selon la revendication 14, dans lequel l'étape de commande comprend la commande de la différence entre le niveau de luminosité d'au moins un bloc dans une trame précédente et le niveau de luminosité de l'au moins un bloc dans la trame courante correspondant à la même position dans la trame afin que la différence se situe dans une gamme prédéterminée.

**16.** Procédé selon la revendication 15, dans lequel la commande du niveau de luminosité comprend la commande du niveau de luminosité de la trame courante afin qu'il soit proche du niveau de luminosité de la trame précédente à mesure que la différence de niveau de luminosité entre la trame précédente et la trame courante diminue.

**17.** Procédé selon la revendication 12, dans lequel la valeur maximale prédéterminée est variable.

**18.** Procédé selon la revendication 17, dans lequel la valeur maximale prédéterminée est variable en fonction des valeurs de luminosité des blocs ayant été utilisés pour déterminer la différence.

**19.** Procédé selon la revendication 18, dans lequel la valeur maximale prédéterminée est inférieure dans le cas où les blocs ayant été utilisés pour déterminer la différence ont des valeurs de luminosité relativement faibles par comparaison au cas où les blocs ayant été utilisés pour déterminer la différence ont une valeur de luminosité relativement élevée.

# FIG. 1

# FIG. 2

# FIG. 3

START

S11 — IMAGE DATA APPLIED TO DISPLAY PANEL? — NO

YES

S13 — OPERATE BRIGHTNESS LEVELS OF IMAGE DATA APPLIED TO DISPLAY PANEL BY BLOCKS

S15 — OPERATE DIFFERENCE IN BRIGHTNESS LEVEL BETWEEN ADJACENT BLOCKS

S17 — CHANGE AT LEAST ONE OF BRIGHTNESS LEVELS OF BLOCKS TO PREDETERMINED BRIGHTNESS LEVEL SET BASED ON DIFFERENCE IN BRIGHTNESS LEVEL BETWEEN ADJACEN BLOCKS SO THAT DIFFERENCE FALLS WITHIN PREDETERMINED RANGE

S19 — CALCULATE BRIGHTNESS LEVELS OF IMAGE DATA CORRESPONDING TO FRAMES

S21 — OPERATE DIFFERENCE IN BRIGHTNESS LEVELS BETWEEN CONSECUTIVE PRECEDING AND RECEDING FRAMES

S23 — CONTROL BRIGHTNESS LEVEL OF RECEDING FRAME SO THAT THE DIFFERENCE FALLS WITHIN PREDETERMINED RANGE

S25 — DRIVE LIGHT SOURCE BASED ON CONTROLLED BRIGHTNESS LEVEL

END

**EP 1 788 550 B1**

**REFERENCES CITED IN THE DESCRIPTION**

**Patent documents cited in the description**

- US 20050184952 A